# EUROPEAN PATENT SPECIFICATION

(11) **EP 1 746 738 B1**
(45) Date of publication and mention of the grant of the patent: **08.07.2009**
(21) Application number: 05257535.4
(22) Date of filing: 07.12.2005
(51) Int. Cl.: H04B 1/707

(54) **Method for path selection and signal processing in wireless communications systems**
Verfahren für Pfadselektion und Signalverarbeitung in drahtlosen Kommunikationssystemen
Procédé pour la sélection de trajets et le traitement de signaux dans des systèmes de communication sans fils

(30) Priority: 22.07.2005 US 187121
(43) Date of publication of application: 24.01.2007
(60) Divisional application: 09000237.9
(73) Proprietor: Industrial Technology Research Institute, Chutung Hsin chu 310 (TW)
(72) Inventor: Chiou, Yu-Shu, Taoyuan City Taoyuan County 330 (TW); Wang, Hui Ming, Wunshan District Taipei City 116 (TW); Kuo, Kao-Yueh, Hsinchu City 300 (TW); Yen, Jung-Yu, Sinjhuang City Taipei County 242 (TW)
(74) Representative: Nicholls, Michael John

(56) References cited:
- WO-A-98/33288
- WO-A-20/04084562
- DE-A1-6102005 062 81
- GB-A- 2 268 858
- GB-A- 2 287 858
- US-A1- 2005 105 599

## Description

This invention pertains to a method of path selection in a multi-pathchannel communications system.

In a typical CDMA or WCDMA wireless communications system, a transmitted signal travels from a transmitter to a receiver over multiple paths. Prior to transmission, a base station multiplies the information signal intended for each of the mobile stations by a unique signature sequence, referred to as a pseudo-noise (PN) sequence. The signals for all subscriber mobile stations are then transmitted simultaneously by the base station. Upon receipt, each mobile station demodulates the received signal, the result of which is integrated to isolate the information signal intended for a particular mobile station from the other signals intended for other mobile stations. The signals intended for the other mobile stations appear as noise.

During transmission, each multi-path is considered a separate channel subject to interference effects such as fading and dispersion. In order to receive signals from multiple paths, the receiver demodulates the transmitted signal by combining the multi-path signals. Specifically, a CDMA or a WCDMA system employs a "rake" receiver, which demodulates a received signal using plural demodulation "fingers", each of which demodulates a signal component from a number of the channel paths. A typical rake receiver includes a plurality, from three to six, rake branches or "fingers," each of which is an independent receiver unit that assembles and demodulates one received multi-path assigned to the finger. The outputs of the rake fingers are combined to improve performance. Before the multi-path signals are combined, however, the delays of the multi-path signals must be ascertained.

To ascertain multi-path signal delays, a rake receiver operates in conjunction with a delay searcher and a plurality of delay trackers. The delay searcher conducts a "coarse" searching with a rough resolution so as to quickly analyze a received signal and ascertain the delays, which are then assigned to the rake fingers. In mobile communications, the channels may be subject to additional fading due to the motion of the receiver. The delay trackers therefore track the delays assigned by the searcher between channel searches. Thus, while the searcher looks over a wide range of delays, the trackers look for a smaller range surrounding the assigned delays.

An important consideration in multi-path searching is increasing path detection probability while minimizing path false-alarm probability. To this end, a quality finger management strategy is required. The finger management strategy may include finger assignment algorithm, path selection method, and threshold setting method.

The finger assignment algorithm keeps possible path candidates in a monitoring/tracking path list and adds to the list any new path having the strongest signal strength. Generally, the rake receiver fingers are assigned to the strongest channel multi-path signals. That is, a first finger is assigned to receive the strongest signal and a second finger is assigned to receive the next strongest signal. As received signal strength changes, the finger assignments are changed accordingly. Therefore, a path selection method affects the path detection probability and path false alarm probability directly.

A path tracking loop/path verification unit then tracks or monitors the path delays in the path list. The measure of multi-path strength is the received signal-to-interference ratio (RSSI), a measurement compared to predetermined lock and unlock thresholds. The signal-to-noise ratio of a rake receiver which uses maximal ratio to combine signals improves with each additional finger it combines, provided correct weighting coefficients are used.

A method to set a threshold for path selection, therefore, directly affects the quality of path selection. The threshold is for determination of path candidates. If the estimated parameter about a path, such as path strength, is over the threshold, this path is deemed a true candidate. The threshold setting method may be difficult to implement for different environments or conditions. For example, a threshold suitable for a low signal-to-noise ratio (SNR) signal is not necessarily suitable for a high SNR transmitted signal. A threshold designed for a deep-fading condition is not necessarily good to a normal condition with less fading.

An example is a constant false alarm rate (CFAR) detector. The principal of the CFAR detector is to provide a path selection threshold value for use in the path estimation such that values above the path selection threshold in the cross-correlation pattern are to be identified as path candidates. If the values fall below the path selection threshold, the signals are to be rejected and considered as noise. Depending on the value assigned to a threshold value, a certain probability of false alarm rate is obtained. Multiplying a predefined constant threshold factor, by the current measured noise level. creates a path selection threshold value that is used in a path selection unit to obtain a known, constant false alarm rate.

Putting in context the above, in a cellular mobile communication system, a user of a mobile station communicates with the system through base stations. Each base station has its own coverage area. A base station controls the communication between the system and the mobile station in its own coverage area. When a mobile station moves from one cell to another, the communication control eventually transits from the original base station to the new base station. The transition is for the mobile station to communicate with the base station, having better signal quality than the original base station. To successfully transit, also known as handover or handoff, from one base station to another, the measurement of the quality of neighbor cells is important. Thus, a cell list with cell information is provided. The management of the cell list is an issue in mobile communication because the cell quality information is based on the information of the cell list. Generally, the cell quality is determined by the strength of the signal. With the measured information, the cell list includes a cell quality ranking to determine potential candidate cells for cell handoff. Obviously, handoff can only be effective if the call is transferred to channels that provide adequate signal strength.

US A1 2005/0105599 discloses a method of path selection and method of finger assignment in a digital wireless communications system as defined in the precharacterising portions of claims 1 and 9.
WO A2 2004/084562 discloses methods for assigning methods for assigning multi-paths to rake receivers in a wireless communications system. GB A 2287858 and WOA2 98/33288 disclose hand-off methods in wireless communications systems.

In accordance with the invention, there is provided a method of path selection in a multi-path channel communications system, as defmed in claim 1.

The invention, will be better further described by way of example in conjunction with the appended drawings, in which:-
FIG. 1 is a block diagram of one embodiment of the present invention;
FIG. 2 is a flow diagram illustrating one embodiment of a method of finger assignment consistent with one embodiment of the present invention;
FIGS. 3 - 5 are flow diagrams illustrating embodiments of a path selection method consistent with the present invention;
FIGS. 6 - 7 are exemplary embodiments for setting a threshold value consistent with the method of the present invention;
FIGS. 8 - 9 are plots showing embodiments for cell list management of the present invention;
FIG. 10 is a flow diagram of an embodiment for cell list management consistent with one embodiment of the present invention; and
FIGS. 11-12 are examples of a cell list management method consistent with the present invention.

Reference will now be made in detail to the present embodiments of the invention, examples of which are illustrated in the accompanying drawings. Wherever possible, the same reference numbers will be used throughout the drawings to refer to the same or like parts.

In one aspect, the present invention is directed to an improvement in path detection probability and path false alarm probability. In a novel finger management strategy, the present invention sorts assigned path delays/monitoring delays and the newly searched path delays by parameters that are related to the path detection probability performance and path false alarm performance, such as path strength, path appearance elapsed time and path level crossing rate. Prioritized monitoring delays and newly searched path delays are compared to determine near new delays to one of the monitoring delays. A monitoring delay is assigned a near delay of a newly searched path delay when the difference between the newly searched path delay and the monitoring delay is less than a predetermined threshold. In the event that there is more than one near delays for a monitoring delay, the one with a higher priority is assigned to the monitoring delay.

In another aspect of the present invention, a method of path selection determines possible path candidates by judging the path statuses of the monitoring or searching paths. The path statuses depend on the parameters that are related to the path detection probability performance and path false alarm performance, such as path strength, path appearance elapsed time and path level crossing rate.

Another aspect of the present invention is directed to the setting of a threshold value for path candidate selection. A plurality of thresholds are set for parameters that are related to the path detection probability performance and path false alarm performance, such as path strength, path appearance elapsed time and path level crossing rate. A path compared with the plural thresholds is granted a particular weighting according to the region in which the path is located. The granted weighting is used to update the path status. Furthermore, a fuzzy region, or region of uncertainty, surrounds each threshold to address any instantaneous fluctuations in the threshold. Furthermore, the thresholds are set to be different from each other by a preserved hysteresis region to prevent two thresholds from being too close in values.

Additionally, the present invention is directed to a method of managing a cell list whereby bad quality cells are removed from the cell list. Once removed, the receiver would not waste computational powers to measure and demodulate bad quality cells. The method of the present invention takes into consideration the cell appearance frequency to determine the quality of cells. An example of the cell appearance frequency is the elapsed time that a receiver cannot detect any path from the monitoring cell. If the elapsed time is over a pre-determined threshold, the cell at issue is deemed a bad quality cell and is removed from the cell list. In one aspect, the cell list is ranked by the cell appearance frequency.

The cell list management of the present invention also takes into consideration cell quality estimation, such as signal strength and cell appearance frequency. An example of cell appearance frequency calculated from the elapsed time from the last time a cell can be found at least one path in the receiver. The cell quality estimation is then compared with plural thresholds. For different thresholds, the monitoring cell is granted different weight depending on the region in which the cell is located. A cell quality parameter for the monitoring cell is updated according to the granted weighting. The cell list is then updated according to the measure of cell quality of the monitoring cells.

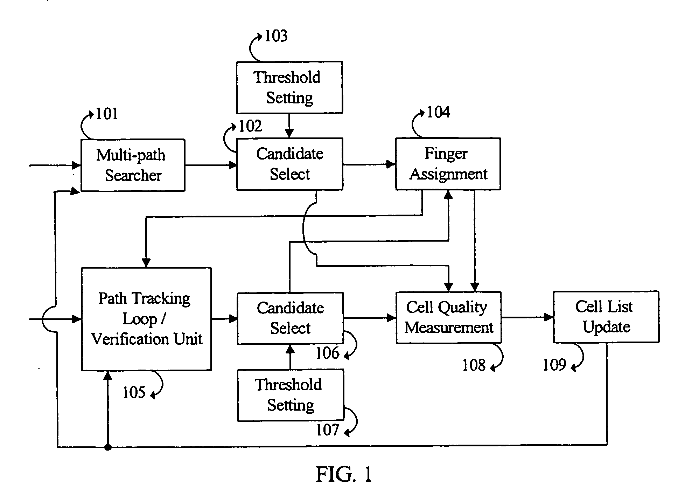

FIG. 1 is a top-level block diagram of one embodiment of the present invention. Referring to FIG. 1, a general flow diagram of finger management and cell list management are depicted. The system and method of the present invention includes a multi-path searcher 101 for conducting coarse multi-path searches. Multi-path searcher 101 receives an input (not labeled) and an updated cell list from cell list update unit 109. A candidate select unit 102 is coupled to receive input from multi-path searcher 101. Candidate select units 102 and 106 determine possible path candidates according to a particular path selection method.

A path tracking loop/verification unit 105 received inputs from a finger assignment unit 104 and an updated cell list from cell list update 109. Path tracking loop/verification unit 105 functions to monitor paths and conduct fine path delay tracking. Two threshold setting units 103 and 107 set the thresholds for candidate selection in accordance with a particular threshold setting method. Finger assignment unit 104 receives possible path candidates from candidate select units 102 and 106, and combines the newly searched path delays from multi-path searcher 101 and other path information to generate a path list for the next path monitoring to path tracking/verification unit 105.

Finger assignment unit 104 also provides finger assignment information to a cell quality measurement unit 108. Together with the information from candidate selection units 102 and 106, cell quality measurement unit 108 provides a cell quality measurement. Cell list update unit 109 then updates and renews the information in the cell list according to the information from cell quality measurement unit 108.

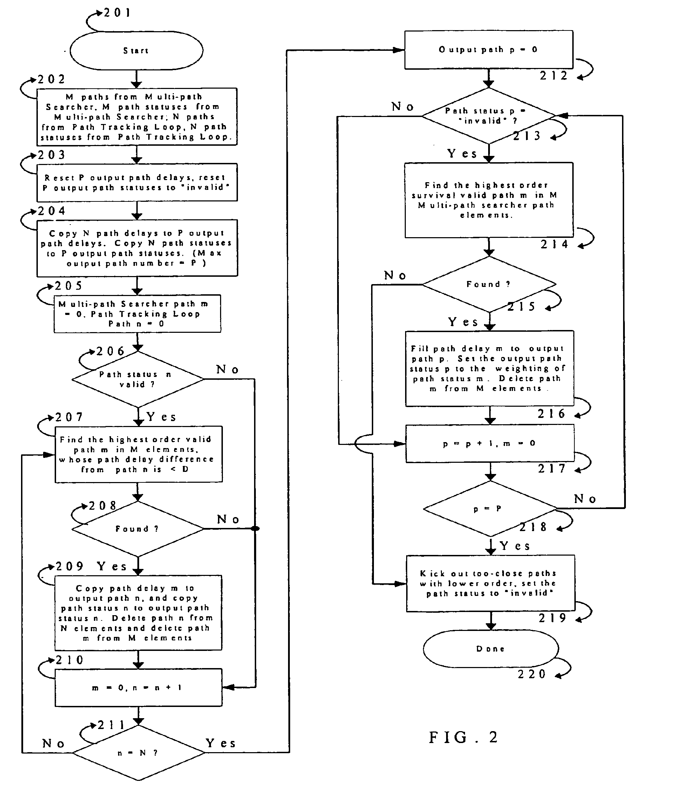

FIG. 2 is an embodiment of finger assignment method consistent with one embodiment of the present invention. Referring to FIG. 2, the method begins at step 201. At step 202, M newly searched path delays from multi-path searcher, such as multi-path searcher 101 in FIG. 1, and N monitoring path delays in path tracking/verification unit, such as path tracking/verification unit 105 in FIG. 1, are provided. There is a corresponding path status for each path delay. The path status is related to path detection probability and path false alarm probability performance parameters, such as path strength, path level crossing rate, and path appearance elapsed time. The path level crossing rate is the rate that the path strength passes through a predetermined threshold. The path appearance elapsed time is the elapsed time from the last time that the same path is detected. The path status could be taken as a confidence evaluation parameter of a possible path candidate. The M newly searched path delays and the N monitoring path delays are first sorted according to path statuses.

Referring to step 203, the expected P output path delays and the next monitoring path list are reset. The corresponding path statuses are reset as "invalid" paths. To keep the monitoring path delays, the N monitoring path delays are first copied to P output path delays at step 204. The P output path statuses also inherit the N path statuses. From steps 205 to 212, the M newly found path delays are compared with the N monitoring path delays to determine the near paths for each of the N monitoring paths. Two paths are determined as near paths if the distance between the two paths is less than a predetermined threshold. If there is any near path for one of the N monitoring paths, the monitoring path delay is replaced by the near path delay, which is newly found in the multi-path searcher. If there is more than one near path delays for a monitoring path delay, the higher-order near path delay is picked to replace the monitoring path delay. The path replacement is performed on the P output path delays, which are copies of the N monitoring path delays. The output path statuses remain the same, which means they are not replaced by the path statuses of the newly searched path delays. The aforementioned steps may be implemented in any known controller coupled to a delay searcher and delay trackers.

After the path replacement is complete, steps 213 to 218 fill the "invalid" output path delays with the remaining, non-replaced, path delays in the M newly searched paths. The remaining path delays are picked by order, and the path statuses of the picked survival path delays are also copied to the output path statuses. To ensure the output path delays differ from each other by at least greater than a predetermined threshold, the paths with lower priorities are eliminated, or kicked out at step 219. The path statuses of the eliminated paths are set as "invalid".

With the prioritized finger assignment as set forth in an exemplary method shown in conjunction with FIG. 2, the path detection probability and the path false alarm probability performance are improved.

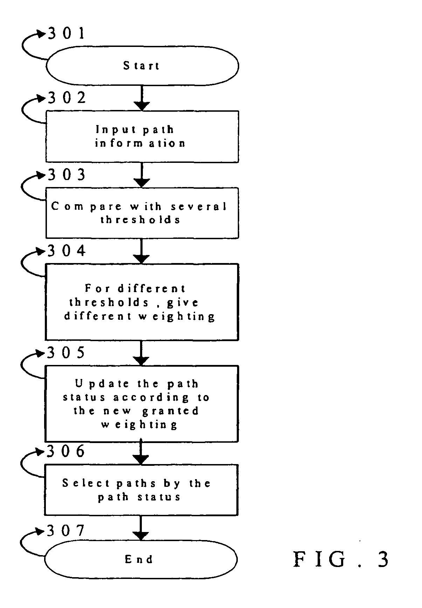

FIG. 3 is a flow diagram of an embodiment of path selection. Referring to FIG. 3, the method begins at step 301 by inputting path information at step 302. The path information includes path delays, corresponding path statuses, and corresponding path parameters for comparison purposes. The path parameters are related to the path detection probability and the path false alarm probability performance. The path parameters may include path strengths, path level crossing rates and path appearance elapsed time. At steps 303 and 304, the parameters are compared with plural thresholds, and the paths are granted different weightings depending on the threshold levels. According to the granted weighting, the corresponding path status is updated at step 305, and the candidate paths are selected according to the path statuses at step 306.

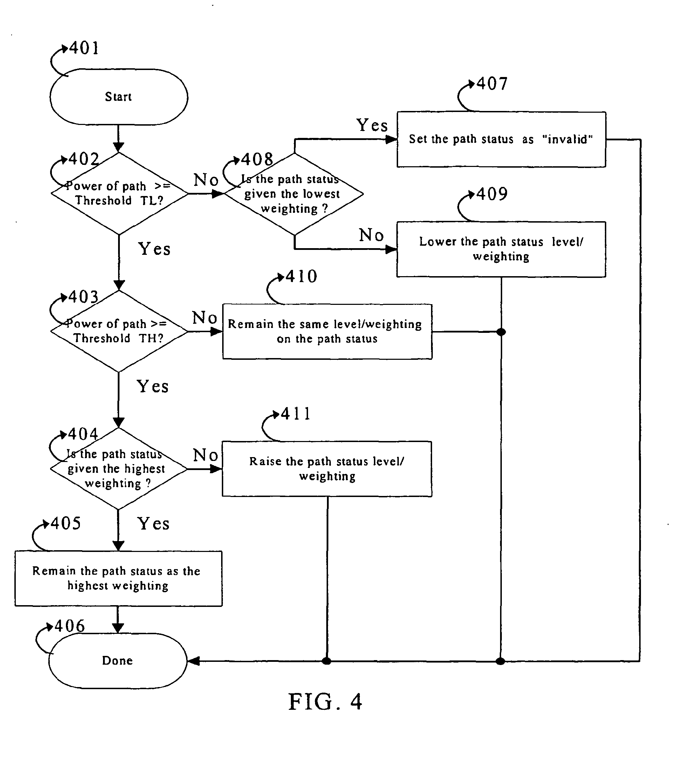

FIG. 4 is a flow diagram of one embodiment for threshold comparison steps 303 and 304 in FIG. 3. Referring to FIG. 4, the parameter for comparison depicted herein is path strength. If the path strength is not greater than a predetermined threshold TL at step 402, the method goes to step 408 to check if the path status is in the lowest level or weighting. The terms level and weighting are interchangeable as appropriate under the circumstances of this embodiment. In this example, the path status is classified into several levels or weightings. If the path status is in the lowest level, the path status is set to "invalid" as in step 407. If the path status is not in the lowest level, the path status level or weighting is lowered at step 409.

However, if the path strength is greater than threshold TL, the path strength is then compared with another threshold TH at step 403. If the path strength is not greater than threshold TH, the path status remains the same at step 410. If the path strength is greater that threshold TH, the path status is verified whether it is at the highest level as in step 404. If the path status is not at the highest level or weighting, the path status is increased or raised at step 411. If the path status is at the highest level or weighting, the path status remains the highest level at step 405.

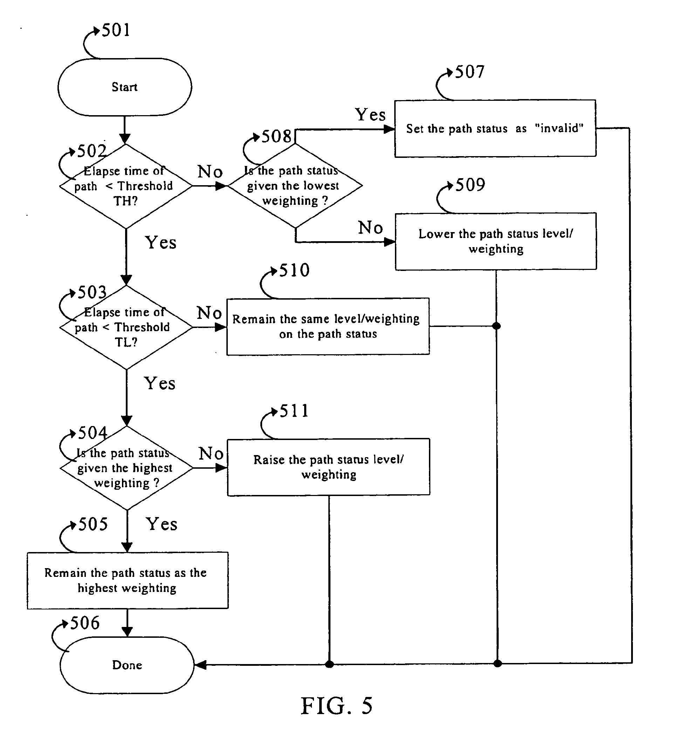

FIG. 5 is a flow diagram of another embodiment for threshold comparison steps 303 and 304 in FIG. 3. Referring to FIG. 5, the parameter for comparison herein is path appearance elapsed time. If the elapsed time is not shorter than a predetermined threshold TH at step 502, the method determines if the path status is in the lowest weighting or level at step 508. The terms level and weighting are interchangeable as appropriate under the circumstances of this embodiment. In this example, the path status is classified into several levels. If the path status is at the lowest level, the path status is set to "invalid" at step 507. If the path status is not at the lowest level, the path status level or weighting is lowered at step 509.

However, if the elapsed time is shorter than threshold TH, the elapsed time is compared with another threshold TL at step 503. If the elapsed time is not shorter than threshold TL, the path status remains the same as before at step 510. If the elapsed time is shorter that threshold TL, the path status is checked to determine if it is at the highest level at step 504. If the path status is not at the highest level, the path status is raised or increased at step 511. If the path status is at the highest level, the path status remains the highest level at step 505.

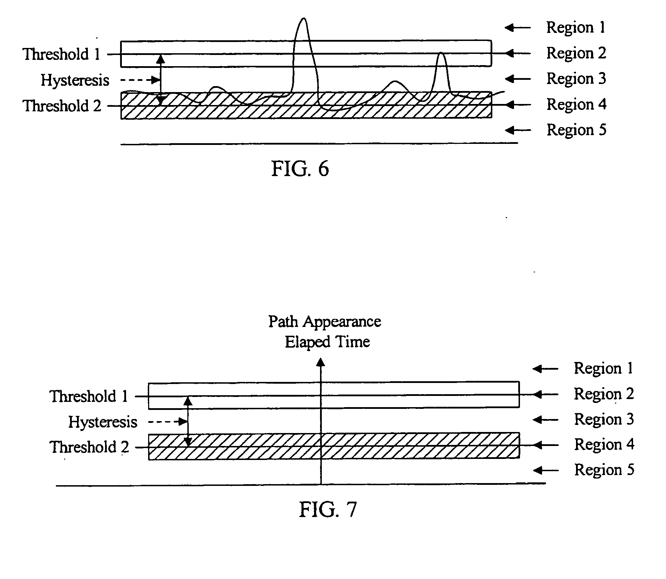

FIG. 6 is an example for setting a threshold value. Referring to FIG. 6, the thresholds for comparing the received power delay profile or channel impulse response are shown. The thresholds may be derived from the power delay profile or other information, such as path strength, noise level, or interference level. A path compared with the plural thresholds is granted weighting according to the region in which the path is located. The granted weighting is used to update the path status. Furthermore, a fuzzy region, or region of uncertainty, surrounds each threshold to address any instantaneous fluctuations in the threshold. Furthermore, the thresholds are set to be different from each other for a preserved hysteresis region to prevent two thresholds from being too close in values.

FIG. 7 is another example for setting a threshold value. Referring to FIG. 7, the thresholds are for comparing the path appearance elapsed time. Similar to FIG. 6, there is a fuzzy region around each threshold as the shadow areas in the figure. Between thresholds, there is a hysteresis region to prevent thresholds from getting too close in values. Each region again is assigned its corresponding weighting.

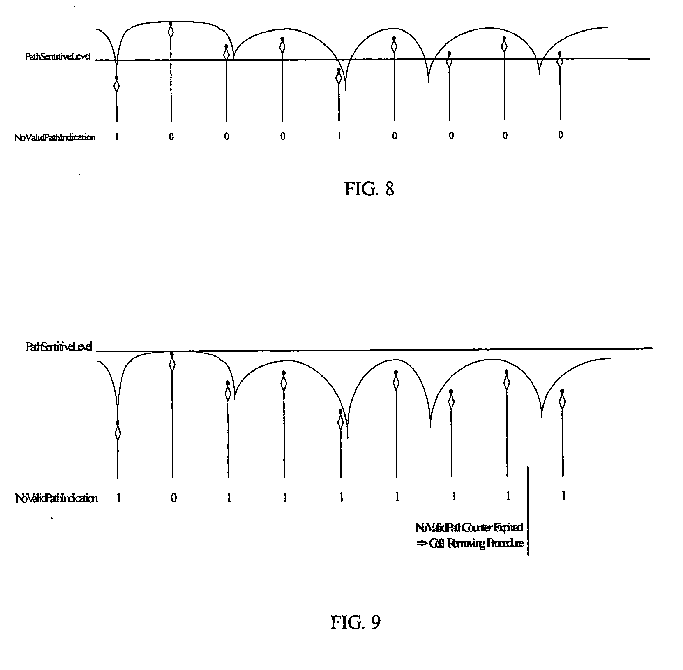

FIG. 8 is a plot showing an exemplary cell appearance frequency for a high SNR cell. Referring to FIG. 8, an indication "NoValidPathIndication" indicates that there is no path passing over the predetermined threshold, and the "PathSensitiveLevel" indicates the predetermined threshold. If the elapsed time of "NoValidPathIndication" is longer than a predetermined threshold, the cell being measured is deemed a bad quality cell. This cell is then removed from the cell list. Here, the elapsed time has not expired and therefore the cell being measured is not a bad cell.

FIG. 9 is a plot showing an exemplary cell appearance frequency for a low SNR cell. Referring to FIG. 9, because the elapsed time is longer than the expiring time, the cell being measured is deemed a bad quality cell, and is therefore removed from the cell list.

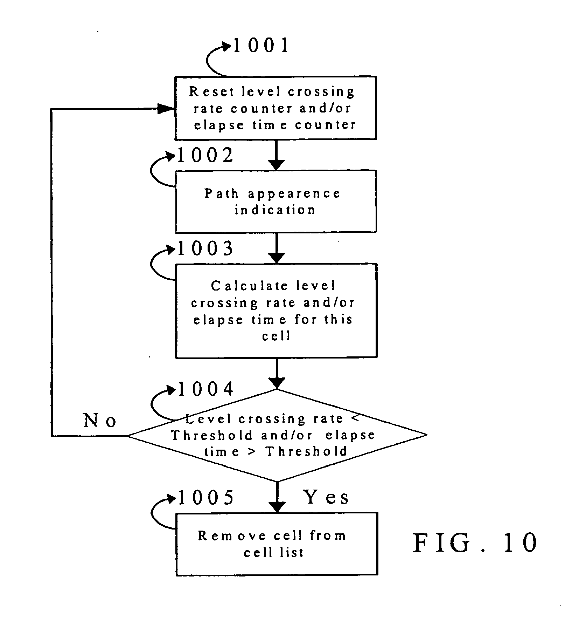

FIG. 10 is a flow diagram of an embodiment for cell list management consistent with one embodiment of the present invention. Referring to FIG. 10, a level crossing rate counter or elapsed time counter, as appropriate, is reset at step 1001. A path appearance indicated is provided at step 1002. A cell quality measured using cell appearance frequency is calculated at step 1003. In this embodiment, the cell appearance frequency is expressed as the signal strength level crossing rate and/or the elapsed time since the last time the monitoring cell could be detected at least one cell at the receiver. The cell quality measurement is compared with a predetermined threshold at step 1004 to decide whether the monitoring cell is a bad quality cell. A bad quality cell is one whose level crossing rate is smaller than the predetermined threshold or if the elapsed time is greater than the predetermined threshold. If it is a bad quality cell, this cell is removed from the cell list at step 1005.

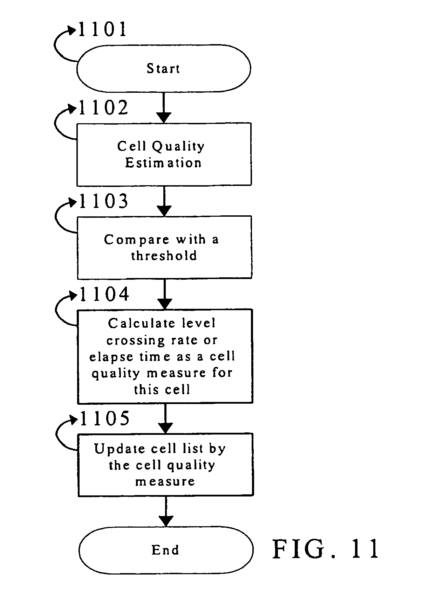

FIG. 11 is another embodiment of cell list management consistent with the present invention. In this embodiment, cell quality estimation is calculated at step 1102. The cell quality estimation could be, for example, the signal strength of the monitoring cell. The cell quality estimation is compared with a predetermined threshold at steps 1103 and 1104 to calculate a level crossing rate and/or an elapsed time as a cell quality measurement. The level crossing rate is the rate that the cell quality estimation passes through a predetermined threshold. The elapsed time may be, for example, the consecutive time that the cell quality estimation is under a predetermined threshold. The cell list is then updated according to the cell quality measurement at step 1105.

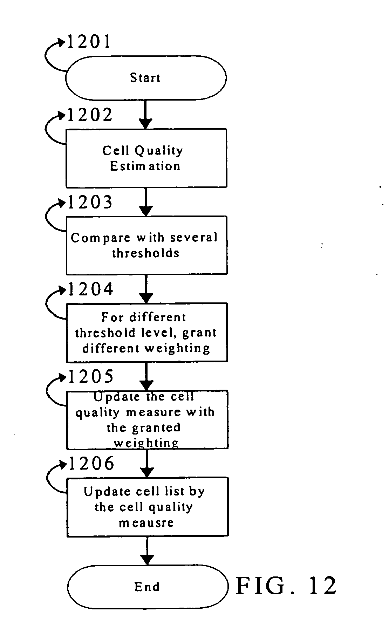

FIG. 12 is a flow diagram of another embodiment of cell list management. Referring to FIG. 12, cell quality estimation is calculated at step 1202. The cell quality estimation may be, for example, the signal strength of the monitoring cell. The cell quality estimation is then compared with plural predetermined thresholds at step 1203. The monitoring cell is granted different weightings according to the compared results at step 1204. A cell quality measurement parameter is then updated based on the granted weighting at step 1205. The cell list is updated according to the cell quality measurement of the cells at step 1206.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

It will be appreciated by those skilled in the art that changes could be made to the embodiments described above without departing from the inventive concept thereof. as defined by the appended claims.

## Claims

1. A method of path selection in a multi-path channel communications system, the method comprising:
providing path information (302) including at least path parameters and path statuses;
setting a plurality of thresholds for the path parameters;
comparing the path parameters (303) with the thresholds corresponding to the path parameters;
selecting at least one candidate path (306);
assigning a weighting to the path parameters depending upon comparison with the thresholds (304);
updating the path statuses according to the assigned weighting to the parameters (305); and
selecting at least one candidate path according to the updated path statuses (306); and
wherein each of said thresholds includes a fuzzy region to address instantaneous fluctuations.

2. The method of claim 1, wherein the path parameters relate to path detection probability and path false alarm probability performance.

3. The method of claim 1, wherein the path information includes at least one of path strength, path level crossing rate and path appearance elapsed time.

4. The method of claim 1, wherein the thresholds are set to be different from each other for a preserved hysteresis region.

5. The method of claim 3, further comprising:
determining (402) whether the path strength is not greater than a first predetermined threshold (TL);
determining (408) whether the path status is a lowest level if the path strength is not greater than the first predetermined threshold (TL);
setting (407) the path status to "invalid" if the path status is in the lowest level; and
lowering (409) a level of the path status if the path status is not in the lowest level.

6. The method of claim 5, further comprising:
comparing (403) the path strength with a second predetermined threshold (TH) if the path strength is greater than the first predetermined threshold (TL);
determining (404) whether the path status is a highest level if the path strength is greater than the second predetermined threshold (TH);
increasing (411) a level of the path status if the path status is not at the highest level; and
maintaining (405) the path status if the path status is in the highest level.

7. The method of claim 3, further comprising:
determining (502) whether the path appearance elapsed time is not shorter than a first predetermined threshold (TH);
determining (508) whether the path appearance elapsed time is a lowest level if the path appearance elapsed time is not shorter than the first predetermined threshold (TH);
setting (507) the path status to "invalid" if the path status is in the lowest level; and
lowering (509) a level of the path status if the path status is not in the lowest level.

8. The method of claim 7, further comprising:
comparing (504) the path appearance elapsed time with a second predetermined threshold (TL) if the path appearance elapsed time is shorter than the first predetermined threshold (TH);
determining (504) whether the path status is a highest level if the path appearance elapsed time is shorter than the second predetermined threshold (TL);
increasing (511) a level of the path status if the path status is not at the highest level; and
maintaining (505) the path status if the path status is in the highest level.

## Patentansprüche

1. Verfahren zur Pfadauswahl in einem Mehrpfadkanal-Kommunikationssystem, das umfasst:
Bereitstellen von Pfadinformationen (302), die wenigstens Pfadparameter und Pfadzustände enthalten,
Setzen mehrerer Schwellenwerte für die Pfadparameter;
Vergleichen der Pfadparameter (303) mit den Schwellenwerten, die den Pfadparametern entsprechen;
Auswählen wenigstens eines Kandidatenpfads (306);
Zuweisen einer Gewichtung zu den Pfadparametern in Abhängigkeit vom Vergleich mit den Schwellenwerten (304);
Aktualisieren der Pfadzustände gemäß der den Parametern zugewiesenen Gewichtung (305); und
Auswählen wenigstens eines Kandidatenpfads gemäß den aktualisierten Pfadzuständen (306),
wobei jeder der Schwellenwerte einen unscharfen Bereich umfasst, um momentane Schwankungen zu berücksichtigen

2. Verfahren nach Anspruch 1, wobei der Pfadparameter mit der Pfaddetektionswahrscheinlichkeit und mit dem Pfad-Fehlalarm-Wahrscheinlichkeitsverhalten in Beziehung steht.

3. Verfahren nach Anspruch 1, wobei die Pfadparameterinformationen die Pfadstärke und/oder die Pfadpegeldurchgangsrate und/oder die Pfaderscheinungsdauer umfassen.

4. Verfahren nach Anspruch 1, wobei die Schwellenwerte in einem aufrechterhaltenen Hysteresebereich verschieden voneinander gesetzt sind.

5. Verfahren nach Anspruch 3, das ferner umfasst:
Bestimmen (402), ob die Pfadstärke nicht größer als ein erster vorgegebener Schwellenwert (TL) ist;
Bestimmen (408), ob der Pfadzustand ein niedrigster Pegel ist, falls die Pfadstärke nicht größer als der erste vorgegebene Schwellenwert (TL) ist;
Setzen (407) des Pfadzustands auf "ungültig", falls der Pfadzustand den niedrigsten Pegel hat; und
Senken (409) des Pegels des Pfadzustands, falls der Pfadzustand nicht der niedrigste Pegel ist.

6. Verfahren nach Anspruch 5, das ferner umfasst:
Vergleichen (403) der Pfadstärke mit einem zweiten vorgegebenen Schwellenwert (TH), falls die Pfadstärke größer als der erste vorgegebene Schwellenwert (TL) ist;
Bestimmen (404), ob der Pfadzustand ein höchster Pegel ist, falls die Pfadstärke größer als der zweite vorgegebene Schwellenwert (TH) ist;
Erhöhen (411) eines Pegels des Pfadzustands, falls der Pfadzustand nicht der höchste Pegel ist; und
Beibehalten (405) des Pfadzustands, falls der Pfadzustand der höchste Pegel ist.

7. Verfahren nach Anspruch 3, das ferner umfasst:
Bestimmen (502), ob die Pfaderscheinungsdauer nicht kürzer als ein erster vorgegebener Schwellenwert (TH) ist;
Bestimmen (508), ob die Pfaderscheinungsdauer ein niedrigster Pegel ist, falls die Pfaderscheinungsdauer nicht kürzer als der erste vorgegebene Schwellenwert (TH) ist;
Setzen (507) des Pfadzustands auf "ungültig", falls der Pfadzustand der niedrigste Pegel ist; und
Senken (509) eines Pegels des Pfadzustands, falls der Pfadzustand nicht der niedrigste Pegel ist.

8. Verfahren nach Anspruch 7, das ferner umfasst:
Vergleichen (504) der Pfaderscheinungsdauer mit einem zweiten vorgegebenen Schwellenwert (TL), falls die Pfaderscheinungsdauer kürzer als der erste vorgegebene Schwellenwert (TH) ist;
Bestimmen (504), ob der Pfadzustand ein höchster Pegel ist, falls die Pfaderscheinungsdauer kürzer als der zweite vorgegebene Schwellenwert (TL) ist;
Erhöhen (511) eines Pegels des Pfadzustands, falls der Pfadzustand nicht der höchste Pegel ist; und
Beibehalten (505) des Pfadzustands, falls der Pfadzustand der höchste Pegel ist.

## Revendications

1. Procédé de sélection de trajet dans un système de communications par canal multi-trajets, le procédé comportant les étapes consistant à :
délivrer des informations de trajet (302) incluant au moins des paramètres de trajet et des états de trajet,
établir une pluralité de seuils pour les paramètres de trajet,
comparer les paramètres de trajet (303) aux seuils correspondant aux paramètres de trajet,
sélectionner au moins un trajet candidat (306),
attribuer une pondération aux paramètres de trajet en fonction de la comparaison aux seuils (304),
mettre à jour les états de trajet conformément à la pondération attribuée aux paramètres (305), et
sélectionner au moins un trajet candidat conformément aux états de trajet mis à jour (306), et
dans lequel chacun desdits seuils inclut une région floue pour adresser des fluctuations instantanées.

2. Procédé selon la revendication 1, dans lequel les informations de trajet concernent des performances de probabilité de détection de trajet et de probabilité de fausse alarme de trajet.

3. Procédé selon la revendication 1, dans lequel les informations de trajet incluent au moins une information parmi une robustesse de trajet, une vitesse de croisement de niveau de trajet et une durée écoulée d'apparition de trajet.

4. Procédé selon la revendication 1, dans lequel les seuils sont établis pour être différents les uns des autres pour une région d'hystérésis préservée.

5. Procédé selon la revendication 3, comportant en outre les étapes consistant à :
déterminer (402) si la robustesse de trajet n'est pas supérieure à un premier seuil prédéterminé (TL),
déterminer (408) si l'état de trajet est le niveau le plus faible si la robustesse de trajet n'est pas supérieure au premier seuil prédéterminé (TL),
établir (407) l'état de trajet à "invalide" si l'état de trajet est le niveau le plus faible, et
diminuer (409) un niveau de l'état de trajet si l'état de trajet n'est pas au niveau le plus faible.

6. Procédé selon la revendication 5, comportant en outre les étapes consistant à :
comparer (403) la robustesse de trajet à un second seuil prédéterminé (TH) si la robustesse du trajet est supérieure au premier seuil prédéterminé (TL),
déterminer (404) si l'état de trajet est le niveau le plus élevé si la robustesse du trajet est supérieure au second seuil prédéterminé (TH),
augmenter (411) un niveau de l'état de trajet si l'état de trajet n'est pas au niveau le plus élevé, et
conserver (405) l'état de trajet si l'état de trajet est au niveau le plus élevé.

7. Procédé selon la revendication 3, comportant en outre les étapes consistant à :
déterminer (502) si la durée écoulée d'apparition de trajet n'est pas plus courte qu'un premier seuil prédéterminé (TH),
déterminer (508) si la durée écoulée d'apparition de trajet est au niveau le plus faible si la durée écoulée d'apparition de trajet n'est pas plus courte que le premier seuil prédéterminé (TH),
établir (507) l'état de trajet à "invalide" si l'état de trajet est au niveau le plus faible, et
diminuer (509) un niveau de l'état de trajet si l'état de trajet n'est pas au niveau le plus faible.

8. Procédé selon la revendication 7, comportant en outre les étapes consistant à :
comparer (504) la durée écoulée d'apparition de trajet à un second seuil prédéterminé (TL) si la durée écoulée d'apparition de trajet est plus courte que le premier seuil prédéterminé (TH),
déterminer (504) si l'état de trajet est le niveau le plus élevé si la durée écoulée d'apparition de trajet est plus courte que le second seuil prédéterminé (TH),
augmenter (511) un niveau de l'état de trajet si l'état de trajet n'est pas au niveau le plus élevé, et
conserver (505) l'état de trajet si l'état de trajet est au niveau le plus élevé.
